# EUROPÄISCHE PATENTSCHRIFT

(11) **EP 0 607 876 B1**
(45) Veröffentlichungstag und Bekanntmachung des Hinweises auf die Patenterteilung: **23.09.1998**
(21) Anmeldenummer: 94100467.3
(22) Anmeldetag: 14.01.1994
(51) Int. Cl.: A01G 9/10, E04D 11/02, B09B 3/00, F23J 1/02

(54) **BEPFLANZBARER DACHAUFBAU UND PFLANZEINHEIT**
ROOF CONSTRUCTION AND CONTAINER WITH PLANT SUBSTRATE
SUBSTRAT DE PLANTES SUR UN TOIT ET DANS UN RECIPIENT

(30) Priorität: 20.01.1993 DE 4301312
(43) Veröffentlichungstag der Anmeldung: 27.07.1994
(73) Patentinhaber: Bott, Peter, D-75335 Dobel (DE)
(72) Erfinder: Bott, Peter, D-75335 Dobel (DE)
(74) Vertreter: Lempert, Jost, Dipl.-Phys. Dr. rer.nat.

(56) Entgegenhaltungen:
- EP-A- 0 035 953
- EP-A- 0 475 489
- EP-A- 0 489 982
- WO-A-85/03842
- DE-A- 3 507 429
- DE-A- 3 620 814
- DE-A- 3 816 865
- DE-A- 3 828 843
- PATENT ABSTRACTS OF JAPAN vol. 016, no. 349 (C-0967)28. Juli 1992 & JP-A-41 004 736 (ELECTRIC POWER) 7. April 1992
- Section Ch, Week 9131, Derwent Publications Ltd., London, GB; Class C04, AN 91-227100 & JP-A-3 146 587 (JUJO PAPER)

## Beschreibung

Die Erfindung betrifft einen bepflanzbaren Dachaufbau und eine Pflanzeinheit.

An einen bepflanzbaren Dachaufbau, aber auch Pflanzeinheiten zur Aufnahme von Jungpflanzen o.ä., insbesondere wenn sie im Außenbereich Verwendung finden, werden heute hohe Anforderungen gestellt, vor allem in bezug auf Erosionssicherheit, Trittfestigkeit, Stabilität, Zersetzungsgrad, Abriebfestigkeit, Entmischungsverhalten, Kapillarität und Wasserspeichervermögen. Es müssen insbesondere im Innenbereich genaue Salzgehalte eingehalten werden.

Für bepflanzbare Dachaufbauten und Pflanzgefäße ist charakteristisch, daß keine Verbindung mit dem Bodenerdreich und damit auch nicht mit dem in diesem befindlichen Grundwasser besteht, vielmehr eine untere, wasserundurchlässige und auch für Pflanzenteile, wie insbesondere deren Wurzeln, undurchdringbare Trennschicht gegeben ist.

Der Substrataufbau muß daher sich selbst und den Pflanzen genügen, d.h. insbesondere eine hohe Wasserhaltekraft haben, da, wie gesagt, eine Verbindung mit dem natürlichen Erdreich und dem natürlichen Wasservorrat nicht gegeben ist, sondern vielmehr hier eine undurchlässige und undurchdringbare Trennschicht vorhanden ist.

Aus der DE-A-36 20 814 ist ein Abdeckmaterial zur Rekultivierung von Halden, Sandgruben, Steinbrüchen, Dämmen, Wällen oder auch Deponien verschiedenster Art bekannt. Dieses Abdeckmaterial wird in einer dem zur Rekultivierung anstehenden Vorhaben angepaßten Schichtstärke auf die genannten Halden, Sandgruben etc. aufgebracht wird. Es ist hier also eine zwar für die Anpflanzungen keinen Halt bietende, aber durchaus wasserdurchlässige und nach Pflanzung für Pflanzenteile, wie insbesondere die Wurzeln, durchdringbare Grundschicht oder Grundlage vorhanden, auf die lediglich, da diese aufgrund Erosion Pflanzen nicht halten kann, ein Abdeckmaterial als Anpflanzhilfe aufgebracht wird, das aber nach Anpflanzen und Verwachsen der Pflanzen mit der Grundschicht keine weitere Bedeutung hat. Das Abdeckmaterial soll aus einer Mischung aus Flug- und Grobasche einerseits und andererseits KZA-Schlamm bestehen. Schon hieraus ergibt sich, daß das Abdeckmaterial eine sehr kompakte, sehr dichte Schicht ist, die beim Aufbringen schlammartig sein mag, beim Austrocknen aber sich sehr stark verfestigt und daher auch den nach dieser Druckschrift gewünschten Halt für das Pflanzmaterial auf dem erodierten Untergrund gewährleistet.

Der Erfindung liegt die Aufgabe zugrunde, Bepflanzungsmöglichkeiten bei einer dichten, undurchlässigen und undurchdringbaren Trennung gegenüber dem üblichen Erdreich zu schaffen, die insbesondere auch umweltfreundlich sind und unter den oben genannten Bedingungen optimale Pflanzeigenschaften gewährleisten.

Erfindungsgemäß wird die genannte Aufgabe mit einem bepflanzbaren Dachaufbau nach dem Anspruch 1 und einer Pflanzeinheit nach dem Anspruch 12 gelöst.

Die Erfindung sieht also vor, daß über einer dichten Schicht - der Dachabdichtung des Dachaufbaus bzw. dem Boden des Pflanzgefäßes - eine Vlies-Schutzlage und hierauf ein Pflanzsubstrat mit einem inerten, stabilen Grundgerüst aus Stein- oder Braunkohlenasche aufgebracht ist.

Es handelt sich bei der Steinkohlenasche um in Heizkraftwerken, die ausschließlich mit Steinkohle betrieben werden, anfallende reine, saubere, unbelastete Steinkohlenrostasche (Rotgrand). Diese fällt in erheblichen Mengen an, wobei große Fraktionen als Unterbau im Wegebau verwendet werden können etc., während für kleinere Korngrößen bisher eine Verwendung nicht gegeben war und diese daher deponiert wurden. Gleiches gilt für die anfallende Braunkohlenrostasche.

Es hat sich überraschenderweise herausgestellt, daß derartige Steinkohlen- oder Braunkohlenasche in optimaler Weise als Pflanzsubstrat geeignet ist. Die Steinkohlenasche beispielsweise weist ein geringes spezifisches Gewicht bei einer Rohdichte von etwa 1,5 g/cm³ auf. Wenn, wie dies in bevorzugter Ausgestaltung vorgesehen ist, die Korngröße der Steinkohlen- oder Braunkohlenasche nicht mehr als die Größe mittlerer Kieskorngröße, also etwa 20 mm beträgt, so ergibt sich für die Steinkohlenasche eine Schüttdichte von etwa 0,7 g/cm³ und damit ein sehr leichtes Material, das insbesondere auch in der Dachbegrünung eingesetzt werden kann, ohne dort zu statischen Problemen zu führen.

Durch die Erfindung kann ein erheblicher, bisher nicht wiederverwendbarer Teil derartiger Steinkohlen- oder Braunkohlenasche wiederverwendet werden und muß nicht deponiert werden. Bei einem üblichen Anfall von derartiger Steinkohlenrostasche fällt bis zu der genannten Korngröße ein Gewichtsanteil von 84,5 % oder mehr an. Obwohl es nicht notwendig ist, kann in bevorzugter Ausgestaltung vorgesehen sein, daß die kleinste Korngröße der Steinkohlen- oder Braunkohlenasche 0, 06 mm (entsprechend Feinsandgröße) beträgt. Der beim natürlichen Anfall unterhalb dieser Korngröße liegende Gewichtsprozentsatz der Steinkohlenasche liegt bei lediglich 6 %, so daß auch hierdurch die Ausbeute der wiederverwertbaren Steinkohlenasche kaum reduziert wird.

Die Wasseraufnahme beträgt bei Atmosphärendruck ca. 590,1 g, der Wasseraufnahmegrad ca. 83 Vol.% bzw. 54 Gew.%.

Neben den genannten Vorteilen geringen spezifischen Gewichts sowie hoher Feuchtigkeitsaufnahme liegt ein weiterer Vorteil der erfindungsgemäß verwendeten Steinkohlenbzw. Braunkohlenrostasche darin, daß diese aufgrund ihrer Dunkelheit ein erhebliches Wärmeabsorptionsvermögen ähnlich dem von Basalt besitzt und dieses Wärmeaufnahmevermögen wesentlich besser als das von Blähton oder -schiefer oder anderen als Grundgerüst für ein Pflanzsubstrat verwendbaren Materialien ist.

Das erfindungsgemäß eingesetzte Substrat weist hohe Trittfestigkeit und Erosionssicherheit auf. Diese werden gewährleistet durch die kantige Form der Grundsubstanz Stein-oder Braunkohlenrostasche, die durch die sehr gute Verzahnung zu einer leichten Verkrustung an der Oberfläche führt. Dadurch sind auch Begrünungen von Schrägdächern und hohen Gebäuden sowie Böschungsmodellierungen möglich. Begrünungen auf Leichtdächern sind - gegebenenfalls mit weiteren Zuschlagstoffen - ausführbar. Steinkohlenrostasche z.B. ist nicht brennbar gemäß Brandklasse A1 und je nach Zuschlagstoff schwer entflammbar. Im Dachbegrünungsbereich kann sie als harte Bedachung gelten.

Das poröse Material besitzt eine hohe Kapillarität und Kationenaustauschkapazität, da Wasser- und Nährstoffmoleküle an und im Material angelagert werden. Eine weitere Erhöhung der Kationenaustauschkapazität ist durch die Beimischung von Löß, Lehm, Ton oder dergleichen möglich, wodurch eine ausgeglichene Versorgung der Pflanzen erreicht wird. Das Material ist jederzeit wieder recyclingfähig und durch die vollständige Kompostierung bei Substratmischungen sofort wiederverwendbar.

Der pH-Wert des eingesetzten Substrates liegt im Toleranz-bereich von 6,5-8,5. Die maximale Wasserkapazität bei 40-50 Vol.%. Der Salzgehalt ist kleiner gleich 3,5 g/l. Der Nährstoffgehalt ist je nach Begrünungsart, z.B. ob extensiv und intensiv, variabel einzustellen. Die Substrate werden bevorzugt so zusammengesetzt, daß sie aus Silofahrzeugen blasbar sind.

Um einen Begrünungsaufbau - als Dachaufbau bzw. Pflanzeinheit - zu schaffen, der aus bis zu 100 % recyclingfähigen Materialien besteht, kann weiter vorgesehen sein, daß die Vlies-Schutzlage aus recyclingfähigem Material besteht und zumindest teilweise verrottbar ist. Damit ist im Sanierungsfalle keine Materialtrennung mehr erforderlich und die Kompostierung eines kompletten Dachbegrünungsaufbaus ist möglich, da das Vlies bzw. der Vliesverbundstoff bevorzugt als Schutz- und/oder als Filterschicht, aber auch als Drainageschicht einsetzbar ist. Auch können Schutz-/Trenn- und Gleitlagen als Matten und/oder Platten aus verrottbaren Materialien vorgesehen werden. Die Wurzeln der Pflanzen wachsen mit der Zeit in die Materialien ein. Dabei bildet sich ein Wurzelfilz aus, der die Schutz- und Filterfunktion der Vliesstoffe übernimmt. Die Vliese bzw. Vliesverbundstoffe werden somit komplett ersetzt, wenn diese verrotten. Als Vlies bzw. Vliesverbundstoffe kommen bevorzugt natürliche Materialien wie Jute, Sisal, Baumwolle, Kokosfasern, Wolle, Naturhaar und Leinen oder Viskose in Frage. Diese natürlichen Substanzen werden im Laufe einiger Jahre in organische Substanz umgewandelt. Es kann aber auch recyclingfähige Polyethylen-Folie als Vlies verwendet werden.

Um für eine ausreichende Stabilisierung des Vlieses zu sorgen, bis das Wurzelgeflecht ein Polster ausgebildet hat und die Funktion der Schutz- und Filterschicht übernehmen kann, weisen die Vliese bzw. Vliesverbundstoffe bevorzugt geringe Anteile an unverrottbaren Fasern, z.B. aus Polypropylen oder Polyester auf. Diese geringen Anteile werden bei der Zersetzung des Vlieses bzw. der Vliesverbundstoffe zerfasert und wirken sich günstig auf die Substratstabilisierung und -vernetzung aus. Auch ist eine Materialtrennung beim Recycling des Begrünungsaufbaus nicht erforderlich, da die unverrottbaren Fasern beim Verrottungsprozeß der Kompostierung die gleichen Eigenschaften wie bei der Zersetzung aufweisen. Nach der Kompostierung und entsprechender Aufdüngung kann der Begrünungsaufbau z.B. als Substrat in der Dachbegrünung oder bei anderen vegetationstechnischen Maßnahmen wiederverwendet werden.

Des weiteren sind die Vliese bzw. Vliesverbundstoffe auch als Abrutschsicherung und Erosionssicherung im Schrägdachbereich einsetzbar. Sie sichern das Substrat bis zur Verwurzelung der Pflanzen vor dem Abrutschen. Nach der Zersetzung des Vlieses ist das Substrat soweit durchwachsen, daß ein Abrutschen nicht mehr möglich ist. Auch werden nach Ausbildung des Wurzelpolsters Abrieb- und Schürfbewegungen durch unterschiedliche Materialausdehnungen unterbunden. Die Abrutschsicherung durch die Vliese erfolgt ähnlich wie die Böschungssicherung, bei der Vliese, die häufig schon eingearbeitetes Saatgut enthalten, als Erosionsschutz auf Skipisten, an Autobahnen oder Uferböschungen dienen.

Die verwendeten Pflanzsubstrate auf der Basis von Steinkohlen- oder Braunkohlenrostasche ermöglichen dauerhafte und funktionstüchtige Begrünungen auch in extremen Bereichen, wie Bepflanzungen auf Dächern, und damit den erfindungsgemäßen bepflanzbaren Dachaufbau. Sie können - auch in Verbindung mit dem gesamten Begrünungsaufbau - komplett umweltfreundlich entsorgt und wiederverwertet werden.

Es hat sich weiterhin herausgestellt, daß Voraussetzung für den Einsatz der Steinkohlen- oder Braunkohlenrostasche als Pflanzsubstrat ist, daß die Asche praktisch keinerlei chemische Belastungen in Form von polyzyklischen, aromatischen Kohlenwasserstoffen (PAK) oder Schwermetallen enthält. Auch Anteile anderer schädlicher Stoffe liegen unter der Nachweisgrenze oder zumindestens unter den Grenzwerten, wie sie für die Lagerung von Erdaushub und Bauschutt vorgesehen sind, so daß für den Einsatz als Pflanzsubstrat ebenfalls keinerlei Bedenken bestehen.

Gegebenenfalls kann vorgesehen sein, daß der Dachaufbau bzw. die Pflanzeinheit zusätzlich zur Steinkohlen- oder Braunkohlenrostasche weitere mineralische, gegebenenfalls wiedergewonnene Bestandteile, wie Lava, Bims, Blähton, - schiefer, Sand, Ziegelbruch, Schaumglas, Ton oder dergleichen aufweisen. Blähton, -schiefer und Bims dienen zur Regelung des Luftund Wasserhaushalts sowie zur Gewichtsregulierung. Mittels Ton erfolgt eine Pufferung. Wenn die Steinkohlen- oder Braunkohlenrostasche zu basisch ist, was in der Regel nicht der Fall ist, aber in Einzelfällen gegeben sein kann, oder aber für Pflanzen, die einen sauren Boden bzw. auch ein saures Pflanzsubstrat benötigen, so kann in erfindungsgemäßer Weise vorgesehen sein, daß ein Torfanteil zur PH-Einstellung enthalten ist. Dies wird aber in der Regel nicht notwendig sein. Weiterhin können Bindemittel und Kleber zur Erosionssicherung vorgesehen werden.

Als Nährstoffträger kommen mineralische oder organische Nährstoffträger in Frage, wie für letztere bevorzugt Hornspäne, Blutmehl, organische Fasern (Kokos-, Schilffasern etc.), Reisspelzen oder dergleichen.

In bevorzugter Ausgestaltung sieht die Erfindung weiterhin vor, daß die Nährstoffträger ausschließlich wiedergewonnene Produkte bzw. Biomasse sind oder aber zumindestens einen hohen Anteil an wiedergewonnenen Produkten aufweisen, wie dies bevorzugt Rindenhumus, Komposte, Holzfaserstoffe, hydrolytisch oder katalytisch aufgearbeitet oder kompostiert, und Hühnermist sind. Es hat sich herausgestellt, daß mit der Steinkohlen- oder Braunkohlenasche als Grundgerüst und diesen Nährstoffträgern ein optimales Substrat geschaffen werden kann.

Die Zeichnung zeigt verschiedene Aufbauten unter Verwendung des erfindungsgemäßen Pflanzsubstrats sowie der verrottbaren Vliese bzw. Vliesverbundstoffe. Dabei zeigt:
- Figur 1: einen erfindungsgemäßen Dachaufbau als Einschichtaufbau;
- Figur 2: einen erfindungsgemäßen Dachaufbau als Mehrschichtaufbau; und

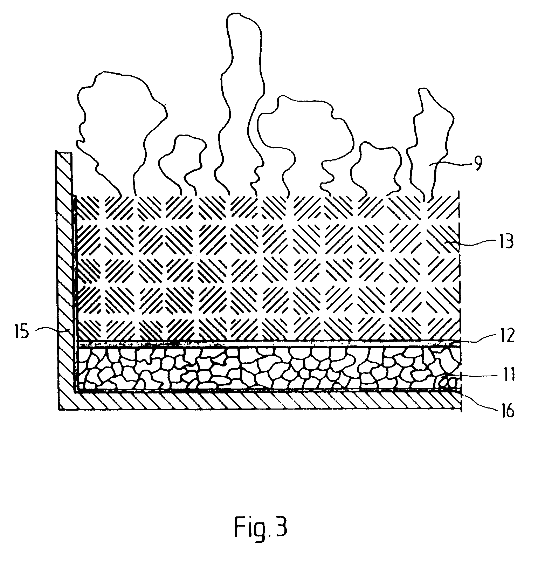

- Figur 3: ein erfindungsgemäßes Pflanzgefäß mit einem Zweischichtaufbau.

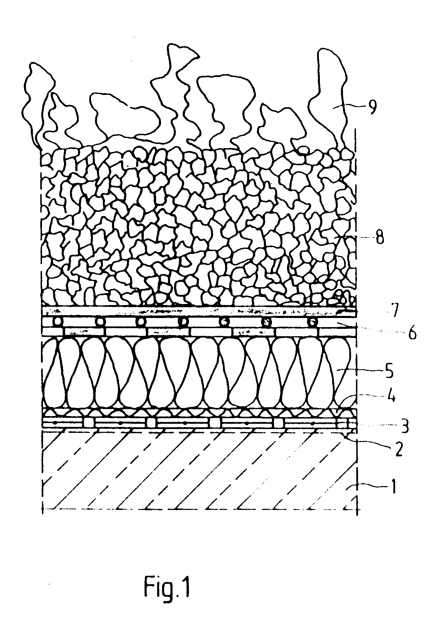

Die Figur 1 zeigt einen Dachaufbau als Einschichtaufbau mit dem erfindungsgemäßen Substrat auf einem Flachdach. Dieses weist in herkömmlicher Weise zunächst eine Stahlbetondecke 1 auf, die auf ihrer Oberseite gegebenenfalls mit einem Voranstrich 2 versehen sein kann. Auf der Stahldecke 1 liegt sodann eine Trennlage 3 als Ausgleichsschicht auf, über der eine Dampfsperre 4 angeordnet ist. Im weiteren Schichtaufbau erfolgt eine Wärmedämmung 5 aus herkömmlicherweise hierfür verwendeten Materialien, wie Polyurethan, Polystyrol oder dergleichen. Die Wärmedämmung 5 ist durch eine Dachabdichtung 6 in Form herkömmlicher Folien mit Gewebeeinlage abgedichtet. Bei dem Einsatz des verwendeten Substrats wird auf die Dachabdichtung eine Schutzschicht 7 aufgelegt, wobei es sich hierbei um das verrottbare und recyclingfähige Vlies bzw. den Vliesverbundstoff handelt, auf das bzw. den dann eine Substratschicht 8 in Mischaufbauweise aufgebracht wird. Die Schicht 8 weist bei diesem Einschichtaufbau neben der Steinkohlenoder Braunkohlenrostasche als Grundgerüst Nährstoffträger aus wiederverwertbaren Produkten, wie insbesondere Rindenhumust, Kompost, Düngern, wie Hühnermist, und/oder Torf auf. Auf diesem Substrat wird dann die Bepflanzung 9 vorgenommen.

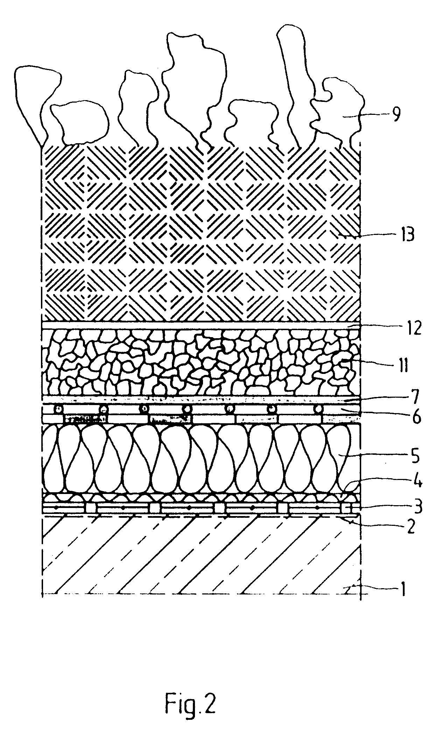

Der Mehrschichtaufbau der Fig. 2 ist bis zur Schutzlage 7 der gleiche wie der Einschichtaufbau, so daß auf die Erläuterung der Figur 1 verwiesen werden kann. Auf der Schutzlage 7 wird eine reine Dränageschicht 11 aufgebracht, die vorzugsweise aus dem erfindungsgemäßen Substrat, nämlich Steinkohlenoder Braunkohlenrostasche, oder eventuell aus dem Vlies bzw. Vliesverbundstoff besteht. Über dieser wird eine weitere, aus dem verrottbaren und recyclingfähigen Vlies bzw. Vliesverbundstoff bestehende Filterlage 12 angeordnet, auf der dann das erfindungsgemäße Substrat 13 in der gewünschten, oben näher beschriebenen Zusammensetzung aufgebracht ist. Auf diesem wird wieder die Bepflanzung 9 vorgenommen.

Bei einem erfindungsgemäßen Pflanzgefäß 15 ist dieses vorzugsweise mit einer Schutzlage 16 aus verrottbarem und recyclingfähigem Vlies ausgekleidet, die auch entlang der Wandung des Pflanzgefäßes mit hochgezogen wird. Über dieser kann bei einem Mehrschichtaufbau wieder eine Drainageschicht 11 aus der erfindungsgemäß verwendeten Steinkohlenoder Braunkohlenrostasche oder dem Vlies bzw. Vliesverbundstoff und über dieser bzw. diesem eine Filterlage 12, ebenfalls aus dem verrottbaren und recyclingfähigen Vlies, vorgesehen sein. Auf dieser wird wiederum das Substrat 13 aufgebracht, das mit den Pflanzen 9 versehen wird.

Natürlich können die eingesetzten Substrate auch auf Vliese aus "unverrottbaren" Materialien aufgebracht werden, die dann als Schutzschicht 7 und/oder als Filterlage 12 dienen. Hierbei können dann z.B. Kunststoffmaterialiefl wie Polyester, Polypropylen, Schaumstoff etc. eingesetzt werden.

## Patentansprüche

1. Bepflanzbarer Dachaufbau, mit einer Dachabdichtung (6), einer auf dieser aufgebrachten und diese schützenden Vlies-Schutzlage (7) und einem auf dieser aufgebrachten Pflanzsubstrat mit einem inerten, stabilen Grundgerüst aus Stein- oder Braunkohlenrostasche.

2. Dachaufbau nach Anspruch 1, dadurch gekennzeichnet, daß die Steinkohlen- oder Braunkohlenasche mit Korngrößen von bis zu 20 mm (entsprechend mittlerer Kieskorngröße) vorliegt.

3. Dachaufbau nach Anspruch 1 oder 2, dadurch gekennzeichnet, daß die kleinste Korngröße der Steinkohlen- oder Braunkohlenasche 0,06 mm (entsprechend Feinsandgröße) beträgt.

4. Dachaufbau nach einem der vorangehenden Ansprüche, dadurch gekennzeichnet, daß das Grundgerüst zusätzlich zur Steinkohlen- oder Braunkohlenasche Bestandteile mit hoher Kationenaustauschkapazität, wie Lehme, Lösse, Ton, aufweist.

5. Dachaufbau nach einem der vorangehenden Ansprüche, dadurch gekennzeichnet, daß er Nährstoffträger aus wiedergewonnenen Produkten aufweist.

6. Dachaufbau nach einem der Ansprüche 1 bis 5, gekennzeichnet durch einen Torfanteil.

7. Dachaufbau nach einem der Ansprüche 1 bis 6, dadurch gekennzeichnet, daß die Vliesschutzlage (7) aus recyclingfähigem Material besteht und zumindest teilweise verrottbar ist.

8. Dachaufbau nach Anspruch 7, dadurch gekennzeichnet, daß die Vlies-Schutzlage (7) aus Naturfaser ist.

9. Dachaufbau nach Anspruch 7, dadurch gekennzeichnet, daß die Vlies-Schutzlage (7) aus Polyethylen-Folie ist.

10. Dachaufbau nach einem der Ansprüche 7 bis 9, dadurch gekennzeichnet, daß die Vliesschutzlage (7) Polypropylen enthält.

11. Dachaufbau nach einem der Ansprüche 7 bis 10, dadurch gekennzeichnet daß die Vliesschutzlage (7) Polyester aufweist.

12. Pflanzeinheit mit einem Pflanzgefäß (15), einer zumindest auf dessen Boden angeordneten schützenden Vlies-Schutzlage (16) und einem auf dieser aufgebrachten Pflanzsubstrat mit einem inerten. stabilen Grundgerüst aus Stein- oder Braunkohlenrostasche.

13. Pflanzeinheit nach Anspruch 12, dadurch gekennzeichnet, daß die Steinkohlen- oder Braunkohlenasche mit Korngrößen von bis zu 20 mm (entsprechend mittlerer Kieskorngröße) vorliegt.

14. Pflanzeinheit nach Anspruch 12 oder 13, dadurch gekennzeichnet. daß die kleinste Korngröße der Steinkohlen- oder Braunkohlenasche 0,06 mm (entsprechend Feinsandgröße) beträgt.

15. Pflanzeinheit nach einem der Ansprüche 12 bis 14, dadurch gekennzeichnet. daß das Grundgerüst zusätzlich zur Steinkohlen- oder Braunkohlenasche Bestandteile mit hoher Kationenaustauschkapazität wie Lehme, Lösse, Ton oder dergleichen aufweist.

16. Pflanzeinheit nach einem der Ansprüche 12 bis 15. dadurch gekennzeichnet. daß sie Nährstoffträger aus wiedergewonnenen Produkten aufweist.

17. Pflanzeinheit nach einem der Ansprüche 12 bis 16, gekennzeichnet durch einen Torfanteil.

18. Pflanzeinheit nach einem der Ansprüche 12 bis 17, dadurch gekennzeichnet. daß die Vliesschutzlage (16) aus recyclingfähigem Material besteht und zumindest teilweise verrottbar ist.

19. Pflanzeinheit nach Anspruch 18, dadurch gekennzeichnet, daß die Vlies-Schutzlage (16) aus Naturfaser ist.

20. Pflanzeinheit nach Anspruch 18, dadurch gekennzeichnet, daß die Vlies-Schutzlage (16) aus Polyethylen-Folie ist.

21. Pflanzeinheit nach einem der Ansprüche 18 bis 20, dadurch gekennzeichnet, daß die Vlies-Schutzlage (16) Polypropylen enthält.

22. Pflanzeinheit nach einem der Ansprüche 18 bis 21, dadurch gekennzeichnet, daß die Vlies-Schutzlage (16) Polyester aufweist.

## Claims

1. Landscapable roof construction, having a roof seal (6), a nonwoven protective layer (7) applied to and protecting the latter and a plant substrate having an inert, stable base structure of coal or lignite grate ash applied to the layer (7).

2. Roof construction according to claim 1, characterized in that the coal or lignite ash has particle sizes of up to 20 mm (corresponding to the average gravel particle size).

3. Roof construction according to claim 1 or 2, characterized in that the smallest particle size of the coal or lignite ash is 0.06 mm (corresponding to fine sand size).

4. Roof construction according to one of the preceding claims, characterized in that the base structure, in addition to the coal or lignite ash, has constituents with a high cation exchange capacity, such as loam, loess and clay.

5. Roof construction according to one of the preceding claims, characterized in that it has nutrient carriers of recovered products.

6. Roof construction according to one of the claims 1 to 5, characterized by a peat content.

7. Roof construction according to one of the claims 1 to 6, characterized in that the nonwoven protective layer (7) is of recyclable material and is at least partly biodegradable.

8. Roof construction according to claim 7, characterized in that the non-woven protective layer (7) is of natural fibres.

9. Roof construction according to claim 7, characterized in that the non-woven protective layer (7) is a polyethylene sheet.

10. Roof construction according to one of the claims 7 to 9, characterized in that the nonwoven protective layer (7) contains polypropylene.

11. Roof construction according to one of the claims 7 to 10, characterized in that the nonwoven protective layer (7) has polyester.

12. Plant unit with a plant container (15), a protective nonwoven protective layer (16) at least placed on its bottom and a plant substrate having an inert, stable base structure of coal or lignite grate ash applied to the layer (16).

13. Plant unit according to claim 12, characterized in that the coal or lignite ash has particle sizes up to 20 mm (corresponding to average gravel particle size).

14. Plant unit according to claim 12 or 13, characterized in that the smallest particle size of the coal or lignite ash is 0.06 mm (corresponding to fine sand size).

15. Plant unit according to one of the claims 12 to 14, characterized in that the base structure, in addition to the coal or lignite ash, has constituents with a high cation exchange capacity, such as loam, loess, clay or the like.

16. Plant unit according to one of the claims 12 to 15, characterized in that it has nutrient carriers of recovered products.

17. Plant unit according to one of the claims 12 to 16, characterized by a peat content.

18. Plant unit according to one of the claims 12 to 17, characterized in that the nonwoven protective layer (16) is of recyclable material and is at least partly biodegradable.

19. Plant unit according to claim 18, characterized in that the nonwoven protective layer (16) is of natural fibres.

20. Plant unit according to claim 18, characterized in that the nonwoven protective layer (16) is a polyethylene sheet.

21. Plant unit according to one of the claims 18 to 20, characterized in that the nonwoven protective layer (16) contains polypropylene.

22. Plant unit according to one of the claims 18 to 21, characterized in that the nonwoven protective layer (16) has polyester.

## Revendications

1. Structure de toit à planter, comprenant une isolation de toit (6), une couche protectrice en non-tissé (7) disposée sur celle-ci et la protégeant, et un substrat de plantation disposé sur cette dernière et composé d'une structure de base inerte et stable en cendres de foyer de houille ou de lignite.

2. Structure de toit selon la revendication 1, caractérisée en ce que les cendres de foyer de houille ou de lignite se présentent sous forme de grains d'une taille inférieure ou égale à 20 mm (correspondant à la taille des grains du gravier moyen).

3. Structure de toit selon la revendication 1 ou 2, caractérisée en ce que la plus petite taille du grain des cendres de houille ou de lignite est de 0,06 mm (correspondant à la taille du sable fin).

4. Structure de toit selon l'une quelconque des revendications précédentes, caractérisée en ce que la structure de base présente en plus des cendres de houille ou de lignite des composants à capacité élevée d'échange cationique tels que des limons, des loess, de l'argile.

5. Structure de toit selon l'une quelconque des revendications précédentes, caractérisée en ce qu'elle présente des substrats de matières nutritives provenant de produits de récupération.

6. Structure de toit selon l'une quelconque des revendications 1 à 5, caractérisée par une proportion d'argile.

7. Structure de toit selon l'une quelconque des revendications 1 à 6, caractérisée en ce que la couche protectrice en non-tissé (7) est réalisée en un matériau recyclable et est au moins partiellement biodégradable.

8. Structure de toit selon la revendication 7, caractérisée en ce que la couche protectrice en non-tissé (7) est en fibres naturelles.

9. Structure de toit selon la revendication 7, caractérisée en ce que la couche protectrice en non-tissé (7) est une feuille de polyéthylène.

10. Structure de toit selon l'une des revendications 7 à 9, caractérisée en ce que la couche protectrice en non-tissé (7) contient du polypropylène.

11. Structure de toit selon les revendications 7 à 10, caractérisée en ce que la couche protectrice en non-tissé (7) contient du polyester.

12. Unité à planter comprenant un récipient pour les plantes (15), une couche protectrice en non-tissé (16) disposée au moins sur le fond de celui-ci, et un substrat de plantation étalé sur cette couche comprenant une structure de base en cendres de foyer de houille ou de lignite.

13. Unité à planter selon la revendication 12, caractérisée en ce que les cendres de houille ou de lignite se présentent sous forme de grains d'une taille inférieure ou égale à 20 mm (correspondant à la taille des grains du gravier moyen).

14. Unité à planter selon la revendication 12 ou 13, caractérisée en ce que la plus petite taille de grain des cendres de houille ou de lignite est de 0,06 mm (correspondant à la taille du sable fin).

15. Unité à planter selon l'une des revendications 12 14, caractérisée en ce que la structure de base présente en plus des cendres de houille ou de lignite des composants à capacité élevée d'échange cationique tels que des limons, des loess, de l'argile.

16. Unité à planter selon l'une quelconque des revendications 12 à 15, caractérisée en ce qu'elle présente des substrats de matières nutritives provenant de produits de récupération.

17. Unité à planter selon l'une quelconque des revendications 12 à 16, caractérisée par une proportion d'argile.

18. Unité à planter selon l'une quelconque des revendications 12 à 17, caractérisée en ce que la couche protectrice en non-tissé (16) est réalisée en un matériau recyclable et est au moins partiellement biodégradable.

19. Unité à planter selon la revendication 18, caractérisée en ce que la couche protectrice en non-tissé (16) est en fibres naturelles.

20. Structure de toit selon la revendication 18, caractérisée en ce que la couche protectrice en non-tissé (16) est une feuille de polyéthylène.

21. Structure de toit selon l'une des revendications 18 à 20, caractérisée en ce que la couche protectrice en non-tissé (16) contient du polypropylène.

22. Structure de toit selon les revendications 18 à 20, caractérisée en ce que la couche protectrice en non-tissé (16) contient du polyester.
